# EUROPEAN PATENT SPECIFICATION

(11) **EP 2 093 421 B1**
(45) Date of publication and mention of the grant of the patent: **17.04.2013**
(21) Application number: 08101887.1
(22) Date of filing: 22.02.2008
(51) Int. Cl.: F04B 1/04, F16D 1/027

(54) **A high pressure pump for supplying fuel to a fuel injection system**
Hochdruckpumpe zur Lieferung von Kraftstoff an ein Kraftstoffeinspritzsystem
Pompe haute pression pour fournir du carburant à un système d'injection de carburant

(43) Date of publication of application: 26.08.2009
(73) Proprietor: Robert Bosch GmbH, 70442 Stuttgart (DE)
(72) Inventor: Boecking, Friedrich, 70499 Stuttgart (DE)

(56) References cited:
- EP-A- 0 473 061
- EP-A- 1 283 366
- WO-A-2004/057184
- DE-A1- 3 822 329
- GB-A- 820 911
- US-A- 2 925 046
- US-B1- 6 669 453

## Description

The invention relates to a high pressure fuel pump for supplying fuel to a fuel injection system of an internal combustion engine according to the preamble of claim 1.

Such a high pressure pump for supplying fuel to a fuel injection system of an internal combustion engine is known from the document WO 2004/057184 A. This pump comprises a drive shaft rotatably supported in a pump housing and at least one piston which is moved by the drive shaft. The piston is moving back and forth in a cylinder bore by rotation of the drive shaft. A pump chamber is bounded by the piston in the cylinder bore. There is at least one fuel inlet is supplying fuel to the pump chamber and there is at least one fuel outlet for delivering the fuel under high pressure. The drive shaft is coupled to a driving element outside the pump housing. The drive shaft has a first part housed in the pump housing for moving the at least one piston and a second part located outside the pump housing and coupled to the driving element. The first and second parts of the drive shaft are joined together permanently as there is only one unit forming the drive shaft and the first and second parts are different regions of the single unit. Usually there is a sealing ring provided between the drive shaft and the pumpe housing to prevent leakage of fuel from the pump housing.

The disadvantage of the known fuel pump is that the fuel pump is highly dependant on the coupling between the drive shaft and the driving element. This coupling may be through a belt or through a gear system or through any other similar mechanism. As different engines use different types of couplings between the driving element and the drive shaft of the pump the same drive shaft can not be used for different engines having different couplings. Each type of coupling between the driving element and the drive shaft needs a specific drive shaft to be manufactured. Manufacturing of different drive shafts for different types of couplings involves additional costs and need additional machinery for the manufacturing.

From the document US-A-2 925 046 a pump is known which has a drive shaft which is composed of several parts which are joined together by form locking joints. Therefore the drive shaft and the pump according to this document are expensive to manufacture.

From the documents EP-A-0 473 061 and DE 38 22 329 A1 drive shafts are known which are composed of two separate parts which are manufactured separately and later joined together by welding. However there is no sealing on the drive shafts.

### Advantages of the invention

The high pressure pump according to claim 1 has the advantage that the costs for manufacturing the drive shaft can be decreased and that the tightness of the pump housing is not affected by the joint of the two parts of the drive shaft.

Further improvements and/or advantages are realised by the features of the dependent patent claims.

The joining of the two parts of the drive shaft is done using the known technologies of welding or friction welding or any other type of technique.

### Brief descriptions of the drawings

- Figure 1: shows a cross section of the fuel pump along line I-I in figure 2
- Figure 2: shows another cross section of the fuel pump along line II-II in figure 1.

### Description of the embodiments

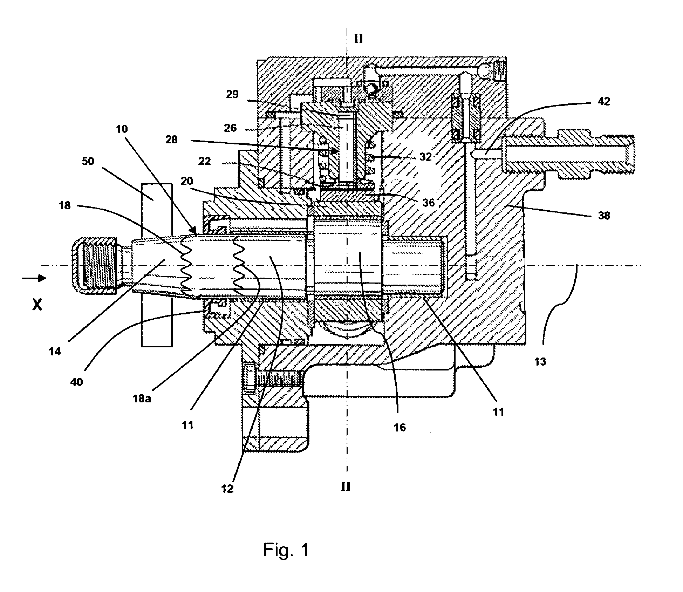

The figure 1 shows a cross section of a pump for supplying fuel to a fuel injection system in an internal combustion engine, according to an embodiment of the invention. The pump is used, for example, in a common rail injection system for supplying fuel to the internal combustion engines.

A pump typically receives the fuel from vehicle fuel tank through a fuel inlet, at a lower pressure of about 2 to 5 bars and delivers the fuel at a higher pressure of up to 2000 bars to a common rail through a fuel outlet. The common rail supplies the fuel under high pressure to the fuel injectors.

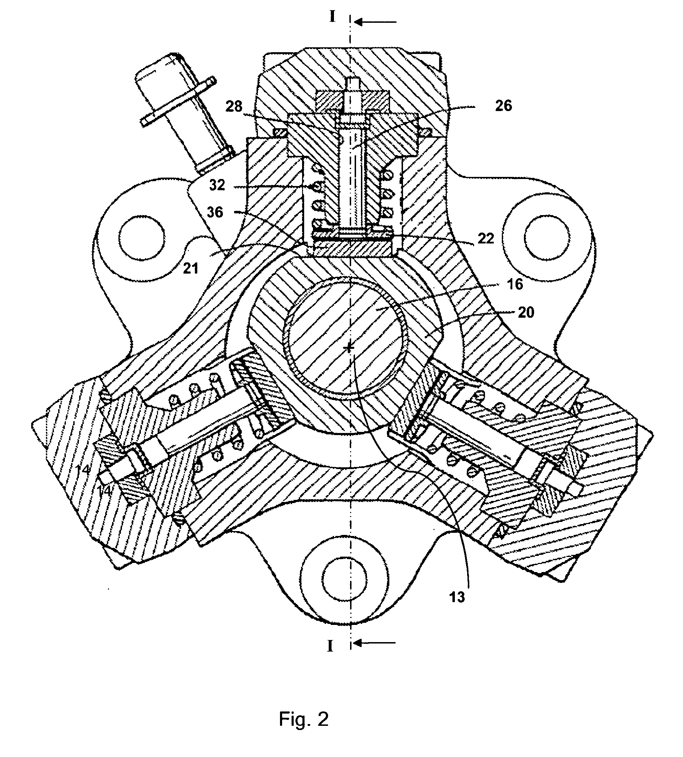

The pump shown in figure 1 has a drive shaft 10 having two parts, a first part 12 and a second part 14, which are manufactured separately and later joined permanently. The first part 12 is rotatably supported in a pump housing 38 and having an eccentric segment 16. Instead of eccentric segment 16, there may be a cam. The drive shaft 10 is supported in bearings 11 in the housing 38, on both sides of the eccentric segment 16. A ring 20 is provided on the eccentric segment 16. The drive shaft 10 is rotatable relative to the ring 20. The ring 20 has 3 flat surfaces 21 which will be explained with Figure 2. The flat surfaces 21 are at an offset of 120 degrees with each other. Each piston 26 rests on a flat surface 21 of the ring 20. The drive shaft 10 rotates along the axis 13.

Here three flat surfaces and three pistons are taken as example, but the actual number may vary based on the requirements of the engine.

Each piston 26 moves in a cylinder bore 28, in a reciprocative manner in a radial direction with respect to the eccentric segment 16 of the drive shaft 10. The piston 26 bounds a pump chamber 29 in the cylinder bore 28.

At the end of the each piston 26, towards the eccentric segment 16, a spring plate 22 is fixed, against which a spring 32 is prestressed. The spring 32 presses the piston against a plate 36 which rests against a flat surface 21 of the ring 20.

There is a sealing ring 40 provided between the drive shaft 10 and the pump housing 38, at a location where the drive shaft 10 is protruding outside of the pump housing.

This sealing ring 40 is to avoid any leakage of the fuel from the pump to the outside of the pump housing 38.

The ring 20 is rotatably supported on the eccentric segment 16 of the first part 12 of the drive shaft 10. Upon rotation of the drive shaft 10, the flat surfaces 21 of the ring 20 are set into motion in radial directions because of the eccentric segment 16. The flat surfaces of the ring 20 move in a cyclic order, radially, alternately towards and away from the axis of rotation 13 of the drive shaft 10.

When one of the flat surfaces 21 of the ring 20 is moving radially towards the axis of the rotation 13, the plate 36 also moves radially towards the axis of the rotation 13. This causes the spring plate 22 also to move in the same direction. As the spring 32 is fixed to the spring plate, the spring 32 pulls the piston 26 in same direction of movement of spring plate 22. The motion of piston 26 in the cylinder bore 28; towards the axis of rotation 13 will cause a low pressure in the pump chamber 29 and the fuel rushes into the pump chamber 29 through a fuel inlet and an inlet valve. The prestressed spring 32 acting upon the spring plate 22 which is fixed to the piston 26, keeps the piston in abutment on the flat surface 21 via the plate 36.

Because of the rotation of the eccentric segment 16, after reaching the closest point to the axis, the flat surface 21 referred above, of the ring 20 starts moving away from the axis in radial direction. This will cause the plate 36 and the spring plate 22 also to move radially away from the axis of rotation 13. The movement of spring plate 22 will push the piston 26 inside the cylinder bore 28 in the same radial direction away from the axis 13. The movement of the piston 26 in the cylinder bore 28 will develop a high pressure in the pump chamber 29 which is filled with fuel. The fuel will rush out through a fuel outlet 42, under high pressure and reaches the common rail and the fuel injectors.

The flat surfaces 21 of the ring 20, move alternatively towards and away from the axis of rotation in a cyclic order, causing the pistons 26 to deliver the fuel under high pressure in a cyclic order

The second part 14 of the drive shaft 10 is outside the housing 38 of the pump. The second part 14 of the drive shaft 10 is coupled to a driving element 50. This driving element 50 may consist of a pulley for a belt or a gear wheel or any similar mechanism. The driving element 50 connects the second part 14 of the drive shaft 10 to the engine, so that when the engine is running, the drive shaft 10 rotates.

The coupling between the second part 14 of the drive shaft 10 and the driving element 50 is specific to the driving element 50 and may vary from engine to engine. The possible couplings between the drive shaft 10 and the driving element 50 are - Slot and lag, Square, Old ham etc. Also in the driving element 50, the size of the gear wheel or the belt may vary from engine to engine. In the pumps which are available as state of the art, when the drive shaft 10 is made for a special type of coupling and if the driving element 50 is having a different type of coupling, the drive shaft 10 of the pump can not be connected to the driving element 50. Under this situation the complete drive shaft 10 of the pump needs to be manufactured again with specific needs of the coupling with a driving element.

To overcome the disadvantage in the prior art, the invention as explained already proposes to have the drive shaft 10 in two parts, a first part 12 and a second part 14. The first part 12 and the second part 14 of the drive shaft 10 are manufactured separately and later joined permanently using welding or friction welding or any other similar technique at a place 18. The first part 12 and a second part 14 may have form locking joint so that the torque can be transferred from one to another.

Because only the second part 14 of the drive shaft 10 is specific to a coupling with a driving element 50, only this second part 14 needs to be manufactured whenever there is a change in coupling with the driving element 50. As the first part 12 of the drive shaft is independent of the couplings, the first part 12 can be manufactured in large quantities and can be used with different second parts 14 manufactured for different couplings.

Using of common first part 12 and manufacturing only a specific second part 14 of the drive shaft 10 will bring down the cost of production, time to manufacture and also the infrastructure required for manufacturing the drive shafts.

In the figure 1, the first part 12 and the second part 14 of the drive shaft 10 are joined at a place 18. This joining place 18 is outside the pump housing 38 and before the sealing ring 40 when we look in the direction of arrow X.

In another embodiment of the invention, the first part 12 and the second part 14 can be joined at a place 18a, after the sealing ring 40 when looked in the direction of arrow X. The place of joint should be displaced along the axis 13, from the sealing ring 40.

Figure 2 shows a cross section of the pump shown in figure 1, along the axis II-II. Here three sets of pistons are shown as example, but the actual number of pistons may vary based on the need of the engine. The pistons 26 are arranged in radial directions relative to the drive shaft 10 at an angle of 120 degrees with each other. The ring 20 is rotatably mounted on the eccentric segment 16 of the drive shaft 10. The ring 20 does not rotate along with the drive shaft 10. The drive shaft 10 rotates along the axis 13. The eccentric segment 16 has an eccentricity with the axis 13 so that when the drive shaft 10 rotates, each of the flat surfaces 21 of the ring 20 is pushed radially away from the axis 13 and towards the axis 13 alternatively, in a cyclic order.

The above sequence keeps repeating for each piston in a cyclic order, so that the common rail which is not shown in the figure will get continuous supply of fuel under high pressure.

## Claims

1. A high pressure pump for supplying high pressure fuel to a fuel injection system of an internal combustion engine, comprising a drive shaft (10) rotatably supported in a pump housing (38), at least one piston (26) which is moved by the drive shaft (10), the piston (26) moving back and forth in a cylinder bore (28) by rotation of the drive shaft (10), a pump chamber (29) bounded in the cylinder bore (28) by the piston (26), at least one fuel inlet supplying fuel to the pump chamber (29), at least one fuel outlet for delivering the fuel under high pressure, wherein the drive shaft (10) is coupled to a driving element (50) outside the pump housing (38), wherein the drive shaft (10) has a first part (12) housed in the housing (38) for moving the at least one piston (26) and a second part (14) located outside the pump housing (38) and coupled to the driving element (50), the first and second parts (12,14) of the drive shaft (10) being joined together permanently, **characterised in that** the two parts (12,14) of the drive shaft (10) are manufactured separately an later joined together, that the two parts (12,14) of the drive shaft (10) are bonded together by welding and that there is a sealing ring (40) disposed between the drive shaft (10) and the pump housing (38) and wherein the joint (18,18a) between the two parts (12,14) of the drive shaft (10) is displaced in the axial direction of the drive shaft (10) with regard to the sealing ring (40).

2. A high pressure pump according to claim 1, wherein the second part (14) of the drive shaft (10) is specific to the coupling with the driving element (50).

3. A high pressure pump according to claim 1, wherein the first part (12) of the drive shaft (10) is independent of the driving element (50).

4. A high pressure pump according to claim 1, where in the two parts (12, 14) of the drive shaft (10) are bonded together by friction welding.

## Patentansprüche

1. Hochdruckpumpe zur Zuführung von Hochdruckkraftstoff zu einem Kraftstoffeinspritzsystem eines Verbrennungsmotors, die eine in einem Pumpengehäuse (38) drehbar gestützte Antriebswelle (10), mindestens einen durch die Antriebswelle (10) bewegten Kolben (26), wobei sich der Kolben (26) durch die Drehung der Antriebswelle (10) in einer Zylinderbohrung (28) hin und her bewegt, eine in der Zylinderbohrung (28) vom Kolben (26) begrenzte Pumpenkammer (29), mindestens einen der Pumpenkammer (29) Kraftstoff zuführenden Kraftstoffeinlass, mindestens einen Kraftstoffauslass zur Abgabe des Kraftstoffs unter Hochdruck umfasst, wobei die Antriebswelle (10) mit einem Antriebselement (50) außerhalb des Pumpengehäuses (38) gekoppelt ist, wobei die Antriebswelle (10) einen ersten Teil (12), der zur Bewegung des mindestens einen Kolbens (26) im Gehäuse (38) untergebracht ist, und einen zweiten Teil (14), der außerhalb des Pumpengehäuses (38) angeordnet ist und mit dem Antriebselement (50) gekoppelt ist, aufweist, wobei der erste und der zweite Teil (12, 14) der Antriebswelle (10) dauerhaft miteinander verbunden sind, **dadurch gekennzeichnet, dass** die beiden Teile (12, 14) der Antriebswelle (10) separat hergestellt und später miteinander verbunden werden, dass die beiden Teile (12, 14) der Antriebswelle (10) durch Schweißen miteinander verbunden werden und dass ein Dichtring (40) zwischen der Antriebswelle (10) und dem Pumpengehäuse (38) angeordnet ist, und wobei die Verbindung (18, 18a) zwischen den beiden Teilen (12, 14) der Antriebswelle (10) bezüglich des Dichtrings (40) in der axialen Richtung der Antriebswelle (10) versetzt ist.

2. Hochdruckpumpe nach Anspruch 1, wobei der zweite Teil (14) der Antriebswelle (10) auf die Kopplung mit dem Antriebselement (50) zugeschnitten ist.

3. Hochdruckpumpe nach Anspruch 1, wobei der erste Teil (12) der Antriebswelle (10) vom Antriebselement (50) unabhängig ist.

4. Hochdruckpumpe nach Anspruch 1, wobei die beiden Teile (12, 14) der Antriebswelle (10) durch Reibschweißen miteinander verbunden sind.

## Revendications

1. Pompe haute pression pour fournir du carburant haute pression à un système d'injection de carburant d'un moteur à combustion interne, comprenant un arbre d'entraînement (10) supporté à rotation dans un carter de pompe (38), au moins un piston (26) qui est déplacé par l'arbre d'entraînement (10), le piston (26) se déplaçant d'avant en arrière dans un alésage de cylindre (28) par rotation de l'arbre d'entraînement (10), une chambre de pompe (29) délimitée dans l'alésage de cylindre (28) par le piston (26), au moins une entrée de carburant fournissant du carburant à la chambre de pompe (29), au moins une sortie de carburant pour délivrer le carburant haute pression, l'arbre d'entraînement (10) étant accouplé à un élément d'entraînement (50) à l'extérieur du carter de pompe (38), l'arbre d'entraînement (10) ayant une première partie (12) reçue dans le carter (38) pour déplacer l'au moins un piston (26) et une deuxième partie (14) située à l'extérieur du carter de pompe (38) et accouplée à l'élément d'entraînement (50), les première et deuxième parties (12, 14) de l'arbre d'entraînement (10) étant réunies l'une à l'autre de manière permanente, **caractérisée en ce que** les deux parties (12, 14) de l'arbre d'entraînement (10) sont fabriquées séparément et ensuite réunies l'une à l'autre, **en ce que** les deux parties (12, 14) de l'arbre d'entraînement (10) sont assemblées l'une à l'autre par soudage et **en ce qu'**une bague d'étanchéité (40) est disposée entre l'arbre d'entraînement (10) et le carter de pompe (38) et le joint (18, 18a) entre les deux parties (12, 14) de l'arbre d'entraînement (10) étant déplacé dans la direction axiale de l'arbre d'entraînement (10) par rapport à la bague d'étanchéité (40).

2. Pompe haute pression selon la revendication 1, dans laquelle la deuxième partie (14) de l'arbre d'entraînement (10) est spécifique à l'accouplement avec l'élément d'entraînement (50).

3. Pompe haute pression selon la revendication 1, dans laquelle la première partie (12) de l'arbre d'entraînement (10) est indépendante de l'élément d'entraînement (50).

4. Pompe haute pression selon la revendication 1, dans laquelle les deux parties (12, 14) de l'arbre d'entraînement (10) sont assemblées l'une à l'autre par soudage par friction.
